# EUROPÄISCHE PATENTSCHRIFT

(11) **EP 1 194 673 B1**
(45) Veröffentlichungstag und Bekanntmachung des Hinweises auf die Patenterteilung: **29.10.2003**
(21) Anmeldenummer: 00938441.3
(22) Anmeldetag: 03.07.2000
(51) Int. Cl.: E06B 5/16

(54) **FEUERHEMMENDES FLÄCHENELEMENT MIT MINDESTENS ZWEI LICHTDURCHLÄSSIGEN BRANDSCHUTZ-GLASPLATTEN**
FIRE-INHIBITING FLAT ELEMENT COMPRISING AT LEAST TWO TRANSPARENT FIRE-RESISTING GLASS PLATES
ELEMENT PLAT DE PROTECTION CONTRE LE FEU DOTE D'AU MOINS DEUX PANNEAUX DE VERRE TRANSPARENTS COUPE-FEU

(30) Priorität: 10.07.1999 CH 127099
(43) Veröffentlichungstag der Anmeldung: 10.04.2002
(73) Patentinhaber: Vetrotech Saint-Gobain (International) AG, 3000 Bern 22 (CH)
(72) Erfinder: SEIDEL, Horst, CH-6318 Walchwil (CH); STREJCEK, Jan, CH-8952 Schlieren (CH); FROMMELT, Simon, D-42781 Haan (DE); WILDENHAIN, Klaus, D-40625 Düsseldorf (DE)
(74) Vertreter: Bruderer, Werner
(86) Internationale Anmeldenummer: CH0000360
(87) Internationale Veröffentlichungsnummer: WO01004449

(56) Entgegenhaltungen:
- DE-U- 29 819 673
- FR-A- 2 321 575
- GB-A- 2 266 112

## Beschreibung

Die Erfindung betrifft ein feuerhemmendes Flächenelement mit mindestens zwei lichtdurchlässigen Brandschutz-Glasplatten, welche an Seitenkanten aneinander stossen, wobei diese Glasplatten aus mindestens zwei parallel und mit Abstand zueinander angeordneten Glasscheiben und einer im Zwischenraum zwischen diesen Glasscheiben angeordneten Brandschutzschicht bestehen, die aneinander stossenden Seitenkanten der Glasplatten mit einem Abstand zueinander angeordnet sind und zwischen diesen Seitenkanten eine Dichtungsanordnung eingebaut ist.

Feuerhemmende Flächenelemente dieser Art dienen dazu, Öffnungen in Bauwerken, beispielsweise Wanddurchbrüche zu verschliessen, oder dienen als Trennoder Begrenzungselemente für Räume. Lichtdurchlässige Brandschutz-Glasplatten bzw. Brandschutzgläser entsprechen in bekannter Weise den Anforderungen zum Beispiel gemäss der Deutschen Norm DIN 4102. Ein bekanntes Brandschutzglas besteht beispielsweise aus mehreren parallel und mit Abstand zueinander angeordneten Silikatglasscheiben, zwischen denen eine Brandschutzschicht eingelagert ist. Diese Brandschutzschicht schäumt im Brandfalle bei Erreichen einer bestimmten Temperatur auf und bildet im Verbund mit den Glasscheiben ein thermisch isolierendes Bauelement.

Aus Gründen der Festigkeit und auch aus produktionstechnischen Gründen können Brandschutzgläser nicht in beliebig grossen Abmessungen hergestellt werden. Zur Herstellung von grossflächigen, feuerhemmenden und lichtdurchlässigen Flächenelementen ist es bekannt, zwei oder mehrere Brandschutz-Glasplatten in einer gemeinsamen Fläche zu einem Flächenelement zusammenzufügen. Die einzelnen Brandschutz-Glasplatten werden dabei mit Hilfe von Verbindungselementen, z.B. Rahmenteilen gegeneinander positioniert und gehalten. Entsprechende Verbindungselemente sind auch im Übergangsbereich zwischen den Brandschutz-Glasplatten und den angrenzenden Elementen des Bauwerkes, bzw. Bauteilen notwendig. Derartige Verbindungselemente, bzw. Rahmenkonstruktionen zur Verbindung von Brandschutz-Glasplatten mit den umgebenden Bauelementen sind beispielsweise aus DE-U-80 24 086 und DE-U-71 48 693 bekannt. DE-U-80 24 086 zeigt die Anordnung einer Feuerschutz-Verglasung in einer Brandschutztüre. Dabei ist eine Brandschutz-Glasplatte mit Hilfe von z-förmigen Rahmenprofilen am Bauteil, bzw. an der Türe befestigt. In der Fuge zwischen den Kantenbereichen der Glasplatte und dem Bauteil sind Auflagen angeordnet, welche aus einem bei Hitzeeinwirkung aufschäumbaren, insbesondere wasserglashaltigen Wärmeisolationsmaterial bestehen. Diese Auflagen dichten die Fugen im Brandfalle ab. DE-U-71 48 693 beschreibt die Halterung einer Brandschutz-Glasplatte in einem Metallrahmen, z.B. einer Türe. Dabei ist die Abdichtung zwischen den Kantenbereichen der Glasplatte und dem Metallrahmen so ausgestaltet, dass im Brandfalle eine Brandschutzmasse, welche zwischen parallelen Glasplatten angeordnet ist, aufschäumt und sich in Richtung der Fuge ausdehnt. Durch das aus der Glasplatte austretende, aufschäumende Material wird die Fuge abgedichtet.

Bei grossflächig verglasten Bauten, zum Beispiel für Hausfassaden, ist es bekannt, Glasplatten an den Kanten ohne Rahmenteile aneinander stossen zu lassen. Die Abdeckung der Fuge zwischen zwei benachbarten Glasplatten erfolgt dann beispielsweise durch Abdecken und teilweises Auffüllen der Fuge mit einer Silikon-Masse. Beim Einsatz von Brandschutz-Glasplatten findet diese Technologie bis heute nur vereinzelt Anwendung, da das Vorurteil besteht, dass die Fuge und das Dichtungs-Material mit einem Rahmenelement abgedeckt sein müssen.

Beim Zusammenfügen von mehreren Brandschutz-Glasplatten zu einem Flächenelement stossen die einzelnen Brandschutz-Glasplatten mindestens je an einer Seitenkante an eine benachbarte Brandschutz-Glasplatte an. Die Halterung von Brandschutz-Glasplatten im Bereiche von zwei aneinander stossenden Seitenkanten von benachbarten Platten, kann mittels der bekannten Rahmen erfolgen. Dies führt aber unter Umständen zu ästhetisch unerwünschten, breiten Rahmenprofilen. Im weiteren besteht auch das bekannte Problem der Wärmebrücken, wenn diese Rahmenprofile beispielsweise aus Metall hergestellt werden. Aus DE-U 91 06 478 ist eine Lösung bekannt, welche die Ausgestaltung von schmalen Rahmenprofilen im Bereiche der aneinander stossenden Seitenkanten ohne Wärmebrücken ermöglicht und es wird auch darauf hingewiesen, dass die Rahmenprofile weggelassen werden können. Gemäss dieser Lösung soll der Durchtritt von Rauch und Flammen durch die Trennfuge zwischen den Seitenkanten von benachbarten Brandschutz-Glasplatten verhindert werden, indem bei Erwärmung der Brandschutz-Glasplatten die Brandschutzschicht aufquillt und in die Fuge zwischen den Seitenkanten benachbarter Glasplatten austritt und diese Fuge ausfüllt. Dabei besteht der Nachteil, dass diese Fuge im Brandfalle erst durch den Austritt des aufquellenden Materials der Brandschutzschicht in den Fugenbereich, feuer- und rauchdicht verschlossen wird. Bis zum Erreichen einer minimalen Temperatur, welche das Aufquellen der Brandschutzmasse bewirkt, ist die Fuge offen und es kann beispielsweise Rauch durchtreten. Ein weiterer Nachteil besteht darin, dass die bekannten Brandschutzschichten aus Materialien bestehen, z.B. hydratisierten Alkalimetalsilikatmassen, welche bei Kontakt mit der Atmosphäre ihre Struktur verändern und mit der Zeit ihre Funktionsfähigkeit verlieren. Damit besteht bei dieser Anordnung die Gefahr, dass die Brandschutzschicht austrocknet oder sich verfärbt. Um dies zu vermeiden ist die beidseitige Anordnung von Rahmenprofilen mit entsprechenden Abdichtungen notwendig.

Eine weitere Lösung ist aus GB 2 266 112 A bekannt. Diese Lösung zeigt ein feuerhemmendes Flächenelement mit mindestens zwei lichtdurchlässigen Brandschutz-Glasplatten. Diese Glasplatten stossen an Seitenkanten aneinander, wobei zwischen den Seitenkanten ein Abstand ausgebildet ist. In diesem Zwischenraum zwischen den aneinander anstossenden Seitenkanten ist eine Dichtungsanordnung angeordnet. Diese Anordnung hat den Nachteil, dass die Brandschutzschicht in den Brandschutz-Glasplatten an den Seitenkanten frei liegt und sowohl mit der Atmosphäre als auch mit dem Dichtungsmaterial in Kontakt und Reaktion steht. Dadurch verändert sich die Struktur der Brandschutzschicht und deren Funktionsfähigkeit. Die Brandschutzschicht kann z.B. austrocknen oder es treten Verfärbungen auf. Im Weiteren kann bei dieser Anordnung, bei Erwärmung der Glasplatten im Brandfalle, die Brandschutzschicht im Kantenbereich ausschäumen und die Dichtung oder die Glasplatten selbst beschädigen.

Es ist Aufgabe der vorliegenden Erfindung, eine Lösung für feuerhemmende Flächenelemente mit mindestens zwei lichtdurchlässigen Brandschutz-Glasplatten vorzuschlagen, bei welcher aneinander stossende Seitenkanten von benachbarten Brandschutz-Glasplatten ohne Rahmenteile ausgebildet sind, die zwischen den Glasscheiben der Brandschutz-Glasplatten angeordneten Brandschutzschichten gegenüber der Umgebungsatmosphäre vollständig abgedichtet und geschützt sind, und die Dichtung im Bereiche der aneinander stossenden Seitenkanten von benachbarten Brandschutz-Glasplatten sofort nach dem Zusammenbau zum Flächenelement vollumfänglich wirksam ist, und auch unterhalb der Aktivierungstemperatur der Brandschutzschicht rauchdicht ist.

Diese Aufgabe wird durch die im Patentanspruch 1 definierten Merkmale gelöst. Vorteilhafte Weiterbildungen der Erfindung ergeben sich nach den Merkmalen der abhängigen Patentansprüche.

Die erfindungsgemässe Vorrichtung hat den Vorteil, dass grossflächige feuerhemmende Flächenelemente aus mindestens zwei Brandschutz-Glasplatten aufgebaut werden können, bei welchen die Seitenkanten der Glasplatten, welche im lichtdurchlässigen Bereich aneinander stossen, nicht von Rahmenteilen bedeckt sind, sondern in diesem Bereiche rahmenlos sind. Gleichzeitig ist die Brandschutzschicht, welche zwischen den Glasscheiben der einzelnen Brandschutz-Glasplatten angeordnet ist, entlang der Kantenbereiche der Glasplatten gegen Kontakt mit der Atmosphäre geschützt. Dazu werden die einzelnen Brandschutz-Glasplatten so ausgebildet, dass sich die Brandschutzschicht zwischen den parallelen und mit Abstand zueinander angeordneten Glasscheiben nicht bis zum äussersten Kantenbereich erstreckt, sondern entlang des Kantenbereiches der Platten eine Nute ausgebildet ist, welche einen Bruchteil eines Millimeters bis mehrere Millimeter tief sein kann. Diese Nute wird bereits beim Einbringen der Brandschutzschicht zwischen die parallelen Glasscheiben ausgebildet oder nach der Fertigstellung der Brandschutzplatte in die Brandschutzschicht eingearbeitet. Dies kann beispielsweise durch mechanische Bearbeitung oder mit Hilfe eines Lösungsmittels erfolgen. Diese Nute in der Brandschutzschicht zwischen den Kantenbereichen der Glasscheiben wird mit einem Sperrmaterial ausgefüllt, welches die Brandschutzschicht vor Kontakt mit der Atmosphäre schützt und die Kantenbereiche von jeweils zwei parallel angeordneten Glasscheiben luft- und dampfdicht miteinander verbindet. Geeignete Materialien zum Ausfüllen dieser Nute sind elastische Polymere, vorzugsweise Polysulfid. Die aneinander stossenden Seitenkanten von zwei benachbarten Brandschutz-Glasplatten werden mit einem Abstand von mindestens einem Millimeter zueinander angeordnet, so dass zwischen den Seitenkanten eine Fuge entsteht. In diese Fuge wird eine Dichtungsanordnung eingebracht, wobei gemäss der erfindungsgemässen Anordnung mehrere Ausgestaltungen möglich sind. Die Dichtungsanordnung erstreckt sich über die ganze Länge des Zwischenraumes bzw. der Fuge zwischen den Seitenkanten benachbarter Brandschutz-Glasplatten und ist aus mindestens einem, vorzugsweise mehreren Dichtungselementen aufgebaut. Eine besonders einfache Lösung ergibt sich, indem in die Fuge zwischen den Seitenkanten benachbarter Brandschutz-Glasplatten ein vorgeformtes, elastisches Dichtungsprofil eingelegt wird. Dabei erstreckt sich das Dichtungsprofil durch den ganzen Querschnitt der Fuge zwischen zwei Glasplatten und füllt diesen Querschnitt weitgehend aus. Das Dichtungsprofil besteht dabei in bekannter Weise aus einem hitze- bzw. feuerbeständigen Material aus der Gruppe der Polymere, vorzugsweise einem Naturkautschuk, Synthesekautschuk oder Silikon. Da das Dichtungselement, bzw. das Dichtungsprofil keine Dichtungsfunktion für die Brandschutzschicht erfüllen muss, kann dessen Material optimal auf die gewünschte Feuerbeständigkeit abgestimmt werden. Da sich die Dichtung durch die ganze Fuge erstreckt, ergibt sich der zusätzliche Vorteil, dass die ganze Materialmenge in der Fuge als Schutzelement wirkt. Dies führt zu einer wesentlichen Verbesserung der Widerstandszeit gegen Feuer. Die Abdeckung des Dichtungselementes mit Rahmenteilen ist nicht mehr notwendig.

Ein weiterer Vorteil ergibt sich durch eine mehrteilige Ausgestaltung der Dichtungsanordnung zwischen den aneinander stossenden Seitenkanten benachbarter Brandschutz-Glasplatten. Dabei wird in die Fuge zwischen den aneinander stossenden Seitenkanten der Brandschutz-Glasplatten ein Zusatzelement aus einem feuerhemmenden Material eingelegt. Dieses Material hat mindestens die gleiche feuerhemmende Wirkung wie die erwähnten Polymerdichtungen, vorzugsweise sogar eine bessere Wirkung. An den beiden gegen die Breitseite der Glasplatten gerichteten Seiten, d.h. gegen die beiden Aussenseiten der Fuge, wird das Zusatzelement je von einem Dichtungselement abgedeckt. Dabei kann dieses Dichtungselement ein vorgeformtes, elastisches Dichtungsprofil sein, oder das Dichtungselement wird als plastische Masse aufgebracht. Als plastische Masse sind Elastomere, beispielsweise Silikonkautschuk geeignet. Eine besonders zweckmässige Lösung ergibt sich, wenn als Zusatzelement in die Dichtungsanordnung bzw. in die Fuge ein Profilstab aus Hartholz eingelegt wird. Der verbleibende Restbereich der Fuge wird mit einer Silikonmasse, beispielsweise GE Pensil 300 der Firma General Electric Silicons ausgefüllt. Diese Silikonmasse verbindet die aneinander stossenden Brandschutz-Glasplatten, bzw. deren äussere Glasscheiben miteinander und dichtet die Fuge gegen Feuchtigkeit und Luft ab. Sie schützt die Kanten der Glasplatten und auch das eingelegte Zusatzelement. Eine weitere vorteilhafte Lösung besteht darin, als Zusatzelement in die Dichtungsanordnung einen Profilstab aus einem wasserhaltigen Silikat enthaltenden Material einzulegen, beispielsweise Kerafix Blähpapier der Firma Gluske GmbH. Die Dichtungsanordnung mit einem Zusatzelement erfüllt alle Anforderungen des Brandschutzes ohne Rahmenelemente. Gleichzeitig wird auch die Brandschutzschicht in den Glasplatten dauerhaft und vollständig vor äusseren Einflüssen geschützt.

Mit der erfindungsgemässen Vorrichtung lassen sich bei grossflächigen feuerhemmenden Flächenelementen rahmenlose Fugen zwischen aneinander stossenden Seitenkanten vor Brandschutz-Glasplatten ausbilden, welche sehr schmal sind und praktisch nicht in Erscheinung treten. Dies ermöglicht die Konstruktion von ästhetisch optimal gestalteten lichtdurchlässigen Flächenelementen, wobei gleichzeitig eine hohe feuerhemmende Wirkung bzw. Feuerbeständigkeit erreicht wird. Mit der erfindungsgemässen Anordnung lassen sich beispielsweise feuerhemmende Flächenelemente bilden, welche die Bedingungen einer F30 - Verglasung nach DIN 4102 erfüllen. Das Flächenelement ist bereits im Normalzustand, d.h. bei kalten Brandschutz-Glasplatten rauchdicht. Zur Verbindung zwischen dem umgebenden Bauelement, bzw. Bauteil und dem Flächenelement aus Glasplatten werden an sich bekannte Rahmenkonstruktionen eingesetzt. Diese bekannten Rahmenkonstruktionen lassen sich in einfacher Weise mit der erfindungsgemässen Abdichtung der aneinander stossenden Seitenkanten der Brandschutz-Glasplatten kombinieren. Es ist auch möglich, die Fuge zwischen einer Kante einer Glasplatte und dem angrenzenden Bauteil, zum Beispiel einer Mauer, gemäss den Vorrichtungen der Erfindung abzudichten.

Im folgenden wird die Erfindung anhand von Ausführungsbeispielen unter Bezugnahme auf die Zeichnungen näher erläutert. Es zeigen:
- Fig. 1: ein feuerhemmendes Flächenelement, welches aus drei Brandschutz-Glasplatten zusammengefügt und in die Wandung eines Bauteiles eingebaut ist,
- Fig. 2: einen Querschnitt durch die Dichtungsanordnung zwischen zwei aneinander stossenden Seitenkanten von zwei Brandschutz-Glasplatten, und
- Fig. 3: eine weitere Ausführungsform einer Dichtungsanordnung zwischen zwei aneinander stossenden Seitenkanten von Brandschutz-Glasplatten,

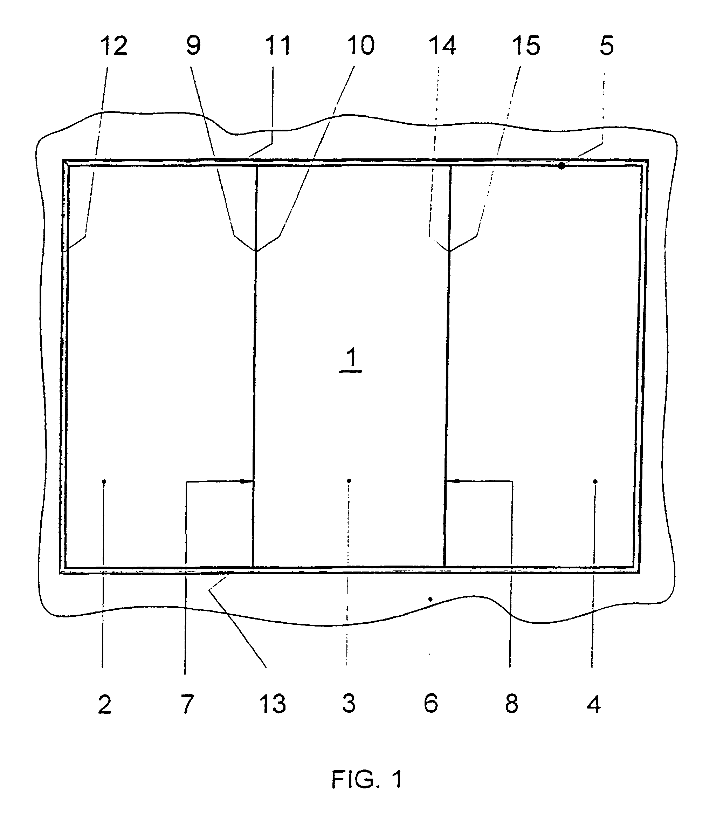

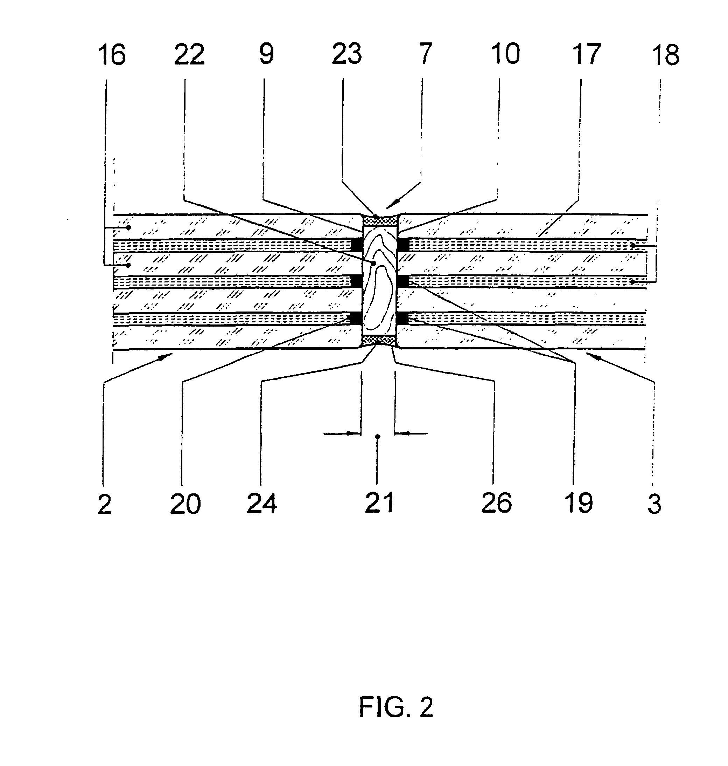

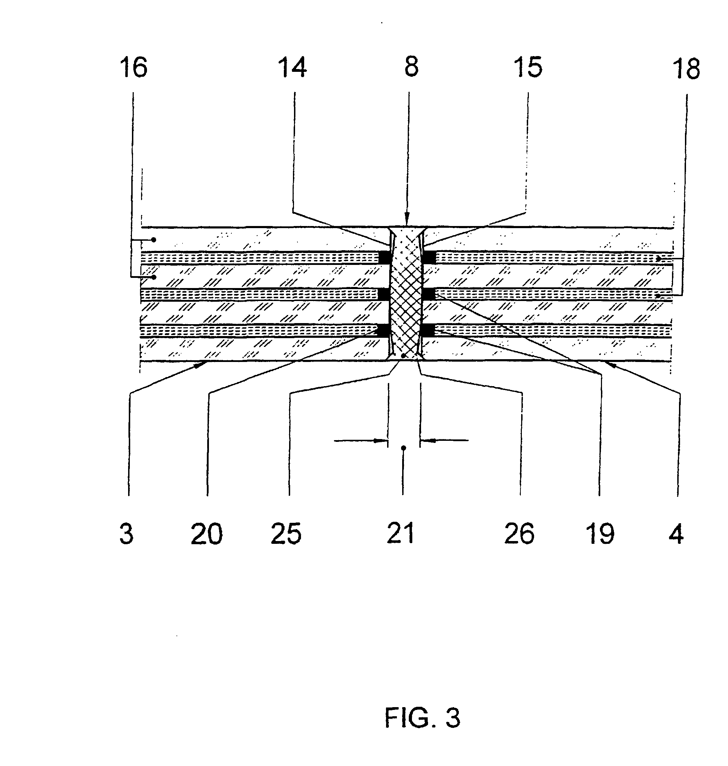

In Fig. 1 ist ein feuerhemmendes Flächenelement 1 dargestellt, welches als Teil eines Bauteiles in eine Wandung 6 eingebaut ist. Das Flächenelement 1 besteht aus drei lichtdurchlässigen Brandschutz-Glasplatten 2, 3, 4, welche über einen an sich bekannten Rahmen 5 mit der Wandung 6 verbunden sind. Als Brandschutz-Glasplatten 2, 3, 4 finden mehrschichtige Platten Verwendung, welche aus mindestens zwei parallel angeordneten Glasscheiben und einer zwischen den Glasscheiben angeordneten Brandschutzschicht bestehen. Dabei werden im beschriebenen Beispiel Brandschutz-Glasplatten verwendet, wie sie beispielsweise in der Patentschrift US-B 5,565,273 beschrieben sind. Im dargestellten Beispiel werden Brandschutz-Glasplatten verwendet, welche aus vier parallel und mit Abstand zueinander angeordneten Glasscheiben und drei in den Zwischenräumen zwischen diesen Glasscheiben angeordneten Brandschutzschichten bestehen. Bei dem dargestellten Flächenelement 1, welches aus drei Brandschutz-Glasplatten 2, 3, 4 besteht, stossen die Seitenkanten von benachbarten Brandschutz-Glasplatten 2, 3 bzw. 3, 4 ohne zusätzliches Rahmenelement aneinander. Die übrigen Seitenkanten, beispielsweise bei der Brandschutz-Glasplatte 1 die obere und die untere Seitenkante 11 und 13, sowie die zweite Seitenkante 12 sind im Rahmen 5 in an sich bekannter Weise gehalten. Zwischen der Seitenkante 9 der Brandschutz-Glasplatte 2 und der Seitenkante 10 der Brandschutz-Glasplatte 3, welche ohne Rahmenteil aneinander stossen, ist eine Dichtungsanordnung 7 eingebaut. Auch zwischen der Seitenkante 14 der Brandschutz-Glasplatte 3 und der Seitenkante 15 der Brandschutz-Glasplatte 4, welche rahmenlos aneinander stossen, ist eine Dichtungsanordnung 8 eingebaut. Die Ausgestaltung dieser Dichtungsanordnungen 7, 8 ist zu den Fig. 2 und 3 anhand von Beispielen beschrieben. Die Dichtungsanordnungen 7 und 8 sind so ausgebildet, dass sie im Brandfalle einem Durchtritt von Feuer und Rauch mindestens so lange standhalten wie die Brandschutz-Glasplatten 2, 3 und 4 selbst. Sie sind aber auch rauchdicht, wenn die Brandschutz-Glasplatten 2, 3, 4 kalt sind, d.h. im normalen Einsatzzustand. Die Dichtungswirkung ist immer vorhanden und tritt nicht erst im Brandfall, d.h. bei genügender Erhitzung auf.

in Fig. 2 ist ein Querschnitt durch den Bereich der Dichtungsanordnung 7 zwischen den Seitenkanten 9 und 10 der beiden Brandschutz-Glasplatten 2 und 3 dargestellt. Die beiden Brandschutz-Glasplatten 2 und 3 sind je aus vier parallel angeordneten Glasscheiben 16 aufgebaut, welche einen Abstand zueinander aufweisen. Der durch diesen Abstand zwischen zwei parallelen Glasscheiben 16 gebildete Zwischenraum 17 ist mit einer Brandschutzschicht 18 ausgefüllt. Im dargestellten Beispiel weisen die vier Glasscheiben 16 je eine Dicke von 2,5 mm auf und der Zwischenraum 17, bzw. die Dicke jeder Brandschutzschicht beträgt ca. 1,5 mm. Die äusseren Abmessungen und die Dicke der Glasscheiben 16 kann im gesamten, dem Fachmann gemäss dem Stand der Technik bekannten Bereiche variieren. Dies trifft auch für die Dicke der Brandschutzschicht 18 zu. Bei der Brandschutzschicht 18 handelt es sich um eine Schutzschicht, welche unter normalen Umständen die Lichtdurchlässigkeit der Glasscheiben 16 nicht oder kaum beeinflusst. Im Brandfalle, bzw. bei Erwärmung des Flächenelementes 1, verändern diese Schutzschichten 18 ihre Struktur und bilden eine Dämmschicht. Die Schutzschichten 18 verlieren dabei ihre Transparenz und es wird eine Schutzwand gebildet, welche den Durchtritt von Wärmestrahlung verhindert und die Zerstörung der Brandschutz-Glasplatten durch den Brand für eine bestimmte Zeit verhindert. Derartige Schutzschichten sind an sich bekannt und bestehen beispielsweise aus einer wasserhaltigen Alkalimetalsilikatmasse. Gelangen derartige Schutzschichten 18 mit der Umgebungsluft in Kontakt, so können sie nach einem bestimmten Zeitraum den Wasseranteil verlieren, aber es können auch Verfärbungen als Folge von Reaktionen der Brandschutzschicht mit der Luft oder deren Bestandteilen erfolgen. Dies ist unerwünscht, da dadurch die Funktionsfähigkeit der Brandschutz-Glasplatte eingeschränkt und die optische Wirkung verändert wird. Um dies zu verhindern erstrecken sich bei den erfindungsgemässen Brandschutz-Glasplatten 2, 3, 4 die Brandschutzschichten 18 nicht bis zur Kante 9 bzw. 10 der Glasplatten 2 bzw. 3. Im Kantenbereich sind in jeder Brandschutzschicht 18 Nuten 19 ausgebildet, welche mit einem Sperrmaterial 20 ausgefüllt sind. Diese Nuten 19 können dabei von 0,5 bis mehrere mm tief sein. Im dargestellten Beispiel beträgt deren Tiefe 4 mm. Diese Nuten 19 werden beispielsweise durch mechanische Bearbeitung des Randbereiches jeder Brandschutzschicht 18 nach der Herstellung der Brandschutz-Glasplatten 2, 3, 4 eingearbeitet und anschliessend mit dem Sperrmaterial 20 aufgefüllt. Die Erzeugung der Nuten 19 kann auch mit Hilfe von Lösungsmitteln oder durch Einlegen und anschliessendes Entfemen von Füllstäben bei der Produktion erfolgen. Als Sperrmaterial 20 findet dabei ein Material Verwendung, welches plastisch verarbeitbar ist und einfach in die Nuten 19 eingebracht werden kann, wobei beispielsweise Materialien der Gruppe der elastischen Polymere geeignet sind, z.B. Polysulfid. Das Sperrmaterial 20 verbindet sich mit den Randflächen-Bereichen der Glasscheiben 16, welche die Nuten 19 seitlich begrenzen und bildet eine feuchtigkeits- und luftdichte Abdichtung zwischen der Umgebungsatmosphäre und den Brandschutzschichten 18. Die beiden Seitenkanten 9 und 10 der beiden Brandschutz-Glasplatten 2 und 3 sind mit einem Abstand 21 von mindestens 1 mm, im dargestellten Beispiel von 4 mm, zueinander angeordnet, so dass sich zwischen den beiden Brandschutz-Glasplatten 2, 3 eine Fuge, bzw. ein Zwischenraum 26 bildet. In diese Fuge ist zwischen den Seitenkanten 9 und 10 der beiden Brandschutz-Glasplatten 2, 3 ein Zusatzelement 22 eingelegt, welches im dargestellten Beispiel durch eine Hartholzleiste aus Buchenholz gebildet ist. Diese Leiste hat beispielsweise Querschnittsabmessungen von 4 x 10 mm. Die beiden Seitenbereiche, bzw. die gegen die Breitseiten der Glasplatten 2, 3 gerichteten Seiten dieses Zusatzelementes 22 sind je mit einem Dichtungselement 23 bzw. 24 abgedeckt. Bei den Dichtungselementen 23 und 24 kann es sich um ein vorgeformtes Dichtungsprofil handeln, welches formschlüssig mit dem Zusatzelement 22 und den beiden Brandschutz-Glasplatten 2, 3 verbunden wird, oder mit diesen verklebt wird. Eine zweckmässige Lösung besteht darin, die Dichtungselemente 23 und 24 nach dem Zusammenbau des feuerhemmenden Flächenelementes 1 am Einbauort, durch Einbringen einer plastischen Dichtungsmasse zu bilden. Geeignete Dichtungsmassen sind Elastomere insbesondere Silikonmaterialien. Andere geeignete Materialien für das Zusatzelement 22 sind beispielsweise wasserglashaltige Verbindungsstoffe oder feuerbeständige Dichtungsmaterialien.

Fig. 3 zeigt ebenfalls einen Querschnitt durch aneinander stossende Seitenkanten 14, 15 und zwar der Brandschutz-Glasplatten 3 und 4 mit der alternativen Dichtungsanordnung 8. Die Brandschutz-Glasplatten 3 und 4 sind gleich aufgebaut wie bereits zu Fig. 2 beschrieben. Auch hier sind die Nuten 19, welche in die Randbereiche der Brandschutzschichten 18 eingearbeitet sind, mit einem Sperrmaterial 20 ausgefüllt. Die Seitenkanten 14 bzw. 15 der beiden Brandschutz-Glasplatten 3 bzw. 4 sind mit einem Abstand 21 zueinander angeordnet, wobei im dargestelllten Beispiel dieser Abstand 21 vier Millimeter beträgt. In die dadurch entstehende Fuge, bzw. dem Zwischenraum 26 ist ein vorgeformtes Dichtungsband 25 eingelegt, welches die Dichtungsanordnung 8 bildet. Dieses Dichtungsband 25 besteht aus Silikonkautschuk mit einer hohen Wärme- und Brandbeständigkeit. Durch die Elastizität des Dichtungsbandes 25 wird der Zwischenraum zwischen den beiden Seitenkanten 14 und 15 der Brandschutz-Glasplatten 3 und 4 sicher gegen Durchtritt von Feuer und Rauch abgedichtet.

Sowohl die Ausführung gemäss Fig. 2 wie auch gemäss Fig. 3 ermöglicht eine Ausgestaltung der aneinander stossenden Seitenkanten 9, 10 bzw. 14, 15 der Brandschutz-Glasplatten 2, 3 und 4, welche optisch kaum in Erscheinung tritt. Dadurch wird der optisch durchlässige Bereich des feuerhemmenden Flächenelementes 1 kaum gestört. Da im Bereiche der aneinander stossenden Seitenkanten 9, 10 und 14, 15 keine zusätzlichen Rahmenteile notwendig sind, beschränkt sich die sichtbare Trennlinie etwa auf die Abmessung des Abstandes 21 zwischen den Seitenkanten 9, 10 bzw. 14, 15. Das in die Nuten 19 eingebrachte Sperrmaterial 20 tritt nur untergeordnet in Erscheinung, wobei sich im Beispiel gemäss Fig. 2 bei Verwendung eines lichtundurchlässigen Sperrmaterials 20 eine Breite der Trennlinie von ca. 10 mm ergibt. Trotzdem weisen feuerhemmende Flächenelemente 1 der erfindungsgemässen Bauweise eine hohe Schutzwirkung gegen den Durchtritt von Feuer und Rauch im Brandfalle auf. Sind beispielsweise die Brandschutz-Glasplatten 2, 3 und 4 so aufgebaut, dass sie den Anforderungen für eine F-30 Verglasung gemäss DIN 4102 erfüllen, so vermögen die Dichtungsanordnungen gemäss der Erfindung diese Bedingungen ebenfalls zu erfüllen. Die Dichtungsanordnungen 7 oder 8 halten im Brandfalle länger stand, als die Brandschutz-Glasplatten 2, 3, 4 welche nach Überschreiten der erforderlichen Prüfzeit in sich zusammenbrechen. Gleichzeitig erfüllt das Flächenelement 1 auch die Anforderung, dass auch im normalen, d.h. kalten Zustand Dichtigkeit gegen Durchtritt von Rauch gewährleistet ist.

## Patentansprüche

1. Feuerhemmendes Flächenelement (1) mit mindestens zwei lichtdurchlässigen Brandschutz-Glasplatten (2, 3, 4), welche an Seitenkanten (9, 10; 14, 15) aneinander stossen und dabei die übrigen Seitenkanten (11, 12, 13) an einem Bauteil (6) gehalten sind, wobei diese Brandschutz-Glasplatten (2, 3, 4) jeweils aus mindestens zwei parallel und mit Abstand zueinander angeordneten Glasscheiben (16) und einer im Zwischenraum (17) zwischen diesen Glasscheiben (16) angeordneten Brandschutzschicht (18) bestehen und zwischen den aneinander stossenden Seitenkanten (9, 10; 14, 15) der Glasplatten (2, 3, 4) eine Dichtungsanordnung (7, 8) eingebaut ist, wobei die aneinander stossenden Seitenkanten (9, 10; 14, 15) der Glasplatten (2, 3, 4) mit einem Abstand von mindestens 1mm zueinander angeordnet sind und die Dichtungsanordnung (7, 8) in diesem Zwischenraum (26) zwischen den Seitenkanten (9, 10; 14, 15) und über dessen ganze Länge angeordnet ist und aus einem Dichtungselement (23, 24, 25) besteht, **dadurch gekennzeichnet, dass** sich die Brandschutzschicht (18) zwischen den Glasscheiben (16) nicht bis zur Kante (9-15) der jeweiligen Glasplatte (2, 3, 4) erstreckt und entlang des Kantenbereiches eine Nute (19) ausgebildet ist, sowie dass diese Nute (19) im Randbereich zwischen den Glasscheiben (16) mit einem Sperrmaterial (20) ausgefüllt ist.

2. Feuerhemmendes Flächenelement (1) nach Patentanspruch 1, **dadurch gekennzeichnet, dass** in die Dichtungsanordnung (7, 8) und zwischen die Seitenkanten (9, 10; 14, 15) der Brandschutz-Glasplatten (2, 3, 4) ein Zusatzelement (22) aus einem feuerhemmendem Material eingelegt ist, wobei dieses Zusatzelement (22) an den beiden gegen die Breitseiten der Brandschutz-Glasplatten (2, 3, 4) gerichteten Seiten je von einem elastischen Dichtungselement (23, 24) abgedeckt ist.

3. Feuerhemmendes Flächenelement (1) nach Patentanspruch 1 oder 2, **dadurch gekennzeichnet, dass** das elastische Dichtungselement (23, 24, 25) aus einem Material der Gruppe der Elastomere, vorzugsweise einem Naturoder Synthesekautschuk oder Silicon besteht.

4. Feuerhemmendes Flächenelement (1) nach einem der Patentansprüche 1 bis 3, **dadurch gekennzeichnet, dass** das elastische Dichtungselement (23, 24, 25) ein vorgeformtes, elastisches Dichtungsprofil ist.

5. Feuerhemmendes Flächenelement (1) nach einem der Patentansprüche 1 bis 4, **dadurch gekennzeichnet, dass** das Sperrmaterial (20) in der Nute (19) am Kantenbereich der Glasplatte (2, 3, 4) ein elastisches Polymer vorzugsweise ein Polysulfid ist.

6. Feuerhemmendes Flächenelement (1) nach Patentanspruch 2, **dadurch gekennzeichnet, dass** das Material des Zusatzelementes (22) in der Dichtungsanordnung (7, 8) Holz ist.

7. Feuerhemmendes Flächenelement (1) nach Patentanspruch 2, **dadurch gekennzeichnet, dass** das Material des Zusatzelementes (22) in der Dichtungsanordnung (7, 8) ein wasserglashaltiges Dichtungsmaterial ist.

## Claims

1. A fire-retardant flat element (1) having at least two light-permeable fire-preventing glass plates (2, 3, 4), which abut one another at side edges (9, 10; 14, 15), the other side edges (11, 12, 13) being held against a component (6), these fire-preventing glass plates (2, 3, 4) each consisting of at least two parallel, spaced glass sheets (16) and a fire-preventing layer (18) arranged in the space (17) between these glass sheets (16) and a sealing arrangement (7, 8) being inserted between the mutually abutting side edges (9, 10; 14, 15) of the glass plates (2, 3, 4), the mutually abutting side edges (9, 10; 14, 15) of the glass plates (2, 3, 4) being arranged spaced from one another by at least 1 mm and the sealing arrangement (7, 8) being arranged in this space (26) between the side edges (9, 10; 14, 15) and over the entire length thereof and consisting of a sealing element (23, 24, 25), **characterised in that** the fire-preventing layer (18) between the glass sheets (16) does not extend as far as the edge (9-15) of the respective glass plate (2, 3, 4) and takes the form of a channel (19) along the edge area, and **in that** this channel (19) is filled with a barrier material (20) in the edge area between the glass sheets (16).

2. A fire-retardant flat element (1) according to claim 1, **characterised in that** an additional element (22) of a fire-retardant material is inserted into the sealing arrangement (7, 8) between the side edges (9, 10; 14, 15) of the fire-preventing glass plates (2, 3, 4), this additional element (22) being covered at the two ends directed towards the faces of the fire-preventing glass plates (2, 3, 4) in each case by a resilient sealing element (23, 24).

3. A fire-retardant flat element (1) according to claim 1 or claim 2, **characterised in that** the resilient sealing element (23, 24, 25) consists of a material from the group comprising elastomers, preferably a natural or synthetic rubber or silicone.

4. A fire-retardant flat element (1) according to one of claims 1 to 3, **characterised in that** the resilient sealing element (23, 24, 25) is a pre-formed resilient sealing profile.

5. A fire-retardant flat element (1) according to one of claims 1 to 4, **characterised in that** the barrier material (20) in the channel (19) at the edge area of the glass plate (2, 3, 4) is a resilient polymer, preferably a polysulfide.

6. A fire-retardant flat element (1) according to claim 2, **characterised in that** the material of the additional element (22) in the sealing arrangement (7, 8) is wood.

7. A fire-retardant flat element (1) according to claim 2, **characterised in that** the material of the additional element (22) in the sealing arrangement (7, 8) is a water glass-containing sealing material.

## Revendications

1. Élément plat de protection contre le feu (1) comprenant au moins deux panneaux de verre coupe-feu (2, 3, 4) transparents, qui s'accolent sur des bords latéraux (9, 10; 14, 15) et dont les autres bords latéraux (11, 12, 13) sont fixés sur un élément de construction (6), dans lequel ces panneaux de verre coupe-feu (2, 3, 4) sont respectivement constitués d'au moins deux vitres (16) disposées en parallèle et à distance l'une de l'autre et d'une couche de protection contre le feu (18) disposée dans l'espace intermédiaire (17) entre les deux vitres (16) et un dispositif d'étanchéité (7, 8) est inséré entre les bords latéraux (9, 10; 14, 15) des panneaux de verre ( 2, 3, 4) qui s'accolent, dans lequel les bords latéraux (9, 10; 14, 15) des panneaux de verre (2, 3, 4) qui s'accolent sont disposés à une distance d'au moins 1 mm l'un de l'autre et le dispositif d'étanchéité (7, 8) est disposé dans cet espace intermédiaire (26) entre les bords latéraux (9, 10; 14, 15) et sur toute leur longueur et est constitué d'au moins un élément de garniture étanche (23, 24, 25), **caractérisé en ce que** la couche de protection contre le feu (18) entre les vitres (16) ne s'étend pas jusqu'au bord (9-15) de la plaque de verre (2, 3, 4) et une rainure (19) est conformée le long de la région du bord et **en ce que** cette rainure (19) dans la région du bord entre les vitres (16) est remplie d'un matériau barrière (20),.

2. Élément plat de protection contre le feu (1) selon la revendication 1, **caractérisé en ce qu'**un élément supplémentaire (22) fait dans un matériau de protection contre le feu est inséré dans le dispositif d'étanchéité (7, 8) et entre les bords latéraux (9, 10; 14, 15) des panneaux de verre coupe-feu (2, 3, 4), cet élément supplémentaire (22) étant recouvert chaque fois par un élément de garniture étanche élastique (23, 24) sur les deux côtés alignés sur les faces larges des panneaux de verre coupe-feu (2, 3, 4).

3. Élément plat de protection contre le feu (1) selon la revendication 1 ou 2, **caractérisé en ce que** l'élément de garniture étanche élastique (23, 24, 25) est constitué d'une matière du groupe des élastomères, de préférence un caoutchouc naturel ou synthétique ou du silicone.

4. Élément plat de protection contre le feu (1) selon une des revendications 1 à 3, **caractérisé en ce que** l'élément de garniture étanche élastique (23, 24, 25) est un profil d'étanchéité élastique préformé.

5. Élément plat de protection contre le feu (1) selon une des revendications 1 à 4, **caractérisé en ce que** le matériau barrière (20) dans la rainure (19) sur la région du bord de la plaque de verre (2, 3, 4) est un polymère élastique, de préférence un polysulfure.

6. Élément plat de protection contre le feu (1) selon la revendication 2, **caractérisé en ce que** le matériau de l'élément supplémentaire (22) dans le dispositif d'étanchéité (7, 8) est du bois.

7. Élément plat de protection contre le feu (1) selon la revendication 2, **caractérisé en ce que** le matériau de l'élément supplémentaire (22) dans le dispositif d'étanchéité (7, 8) est un matériau d'étanchéité contenant du verre soluble.
